**Europäisches Patentamt**

**European Patent Office**

**Office européen des brevets**

(11) Numéro de publication: **0 197 872**
**A1**

## (12) DEMANDE DE BREVET EUROPEEN

(21) Numéro de dépôt: 86430005.8

(22) Date de dépôt: 18.03.86

(51) Int. Cl.⁴: **B 01 D 11/02**

(30) Priorité: 03.04.85 FR 8505216

(43) Date de publication de la demande:
15.10.86 Bulletin 86/42

(84) Etats contractants désignés:
AT BE CH DE GB IT LI LU NL SE

(71) Demandeur: TOURNAIRE, société anonyme:
Route de la Paoute
F-06130 Grasse(FR)

(72) Inventeur: Teisseire, Paul
82 avenue Pierre Sémard
F-06130 Grasse(FR)

(74) Mandataire: Hautier, Jean-Louis
Cabinet Hautier Office Méditerranéen de Brevets
d'Invention et de Marques 24 rue Masséna
F-06000 Nice(FR)

(54) Appareil pour l'extraction solide/liquide composé d'un tambour chauffant tournant dans une cuve fixe, les flasques étant équipés de surfaces filtrantes démontables.

(57) L'invention a pour objet un appareil pour l'extraction solide/liquide.

Il est composé d'une cuve fixe (1) et d'un tambour tournant (9) chauffant sur sa paroi longitudinale et filtrant au niveau de ses flasques grâce à des éléments démontables. La cuve (1) et le tambour (9) comportent des ouvertures et des fermetures (18, 24, 5, 23, 6, 20) pour le chargement et le déchargement de la matière. Le tambour est monté sur un axe tournant (8) animé par un moteur (22). Le moyen d'échange de chaleur est un demi serpentin (10) qui est soudé sur la paroi, le long de la paroi exterieure de la calandre (11).

L'invention s'applique aux procédés d'extraction discontinue de la chimie fine, de la parachimie et de l'agro-industrie.

EP 0 197 872 A1

Croydon Printing Company Ltd

L'invention a pour objet un appareil pour l'extraction solide/liquide, composé d'un tambour chauffant tournant dans une cuve fixe, les flasques étant équipés de surfaces filtrantes démontables.

L'extraction solide/liquide, principalement appliquée dans le domaine de la production à partir de substances végétales, des huiles et des bases pharmaceutiques ou aromatiques, nécessite actuellement l'utilisation d'un des équipements suivants, en fonction de la nature de la matière première ou du solvant et en fonction de la quantité horaire de matière à traiter :

1° : les extracteurs discontinus

Ceux-ci sont soit statiques, soit agités ; certains sont munis de surfaces filtrantes mais tous nécessitent, en fin d'extraction pour la récupération du solvant d'imprégnation :

- soit un transfert de la matière humide dans un autre appareil sécheur, l'ensemble nécessitant un équipement supplémentaire fort coûteux,

- soit l'adoption du principe de l'entraînement par la vapeur d'eau dans l'extracteur lui-même, qui est une opération toujours coûteuse en énergie, souvent longue, et qui a l'inconvénient de donner un résidu imprégné d'eau, voire même une boue, qui pose de nombreux problèmes d'élimination sans pollution, ou sans dépense considérable d'énergie.

2° : les extracteurs continus

dont les applications ne peuvent concerner que les productions de masse et/ou l'ensemble d'extraction est toujours suivi par un ensemble sécheur permettant la récupération du solvant et l'élimination du solide sec.

Le seul inconvénient des procédés continus étant l'obligation de travailler à cadence constante, vingt quatre heures sur vingt quatre, pendant de longues périodes sur le même solide, avec le même solvant, ce qui l'empêche d'être applicable à de nombreuses extractions notamment dans les industries aromatiques, pharmaceutiques ou de chimie fine.

L'appareil, selon l'invention, tend à résoudre tous ces inconvénients. L'extracteur sécheur selon l'invention est composé :

- d'une capacité fixe, dite cuve,
- d'une capacité tournante, dite tambour.

Ledit tambour tournant, incliné sur l'horizontal, comporte un moyen d'échange de chaleur de sa paroi longitudinale et il comporte des moyens de filtration au niveau de chacun de ses flasques.

La cuve de configuration géométrique quelconque, souvent celle d'un volume de révolution, dont l'axe longitudinal est incliné sur l'horizontal, comporte au moins une des bases circulaires qui est démontable.

Ladite cuve comporte des ouvertures de manière à permettre l'introduction et la vidange du solide ainsi que des moyens assurant les mouvements et l'étanchéité des portes fermant lesdites ouvertures et de toutes les tubulures utiles pour les mouvements de liquides, de gaz ou vapeur, les régulations et contrôles.

La cuve comporte une ouverture latérale, dite ouverture de chargement, avec sa porte de fermeture. Elle comporte également une ouverture permettant le départ des vapeurs. Cette ouverture départ des vapeurs est prévue au niveau de la paroi, dans la partie haute de la cuve.

Une porte de visite est également prévue dans la partie haute du corps de la cuve, elle permet d'accéder au dispositif qui commande la porte d'ouverture inférieure du tambour.

Au niveau de la base inférieure, une ouverture inférieure est prévue avec sa porte, commandée par un vérin.

Une des bases, au moins, de la cuve comporte un dispositif de paliers et d'étanchéité permettant le guidage et le passage d'un axe tournant ainsi que les moyens adéquats de nettoyage automatique des surfaces filtrantes du tambour.

Le tambour tournant et chauffant est monté dans la cuve sur l'axe tournant. Il est de configuration géométrique, généralement semblable à celle de la cuve et son axe de rotation est généralement incliné sur l'horizontal comme celui de la cuve. Le tambour est composé d'une calandre et de deux flasques. La paroi de la calandre est lisse à l'intérieur et à l'extérieur, elle comporte un demi serpentin soudé sur sa paroi extérieure.

Ce tambour, constitué d'une calandre, est réalisé de telle sorte que sa paroi intérieure soit lisse et qu'une circulation méthodique de fluide permette à la paroi lisse de transmettre ou d'absorber des calories.

Le tambour comporte un moyen d'échange de chaleur disposé au niveau de la paroi extérieure de la calandre, la paroi intérieure lisse de ladite calandre dudit tambour transmet ou absorbe les calories à la matière chargée à l'intérieur. Le tambour comporte deux flasques en forme de bras rayonnants qui maintiennent des secteurs filtrants.

Ledit tambour comporte également des ouvertures et des portes nécessaires au chargement et à la vidange du solide.

Un moteur assure la rotation de l'arbre central sur lequel est monté, solidaire, le tambour d'échange de chaleur qui tourne dans la cuve.

Le moyen d'échange de chaleur du tambour est un demi serpentin soudé contre la paroi extérieure de la calandre et dans lequel circule un fluide chauffant permettant à la paroi intérieure lisse de la calandre de transmettre ou d'absorber des calories.

<u>AVANTAGES DE L'APPAREIL</u>

**0197872**

A) Le chargement de la matière solide, qui peut intéresser la quasi totalité du volume utile du tambour, peut être réalisé mécaniquement ou manuellement par la porte supérieure, d'une façon très aisée.

B) Par mouvement de rotation du tambour, le contact solide/liquide est parfaitement assuré sous agitation et en utilisant un minimum de volume de solvant, généralement moins de la moitié du volume de la cuve pour chacun.

C) Grâce à l'importante surface d'échange de chaleur et au mouvement qui l'anime, il est très facile de maintenir la masse, pendant l'extraction, à la température optimale (comprise généralement entre plus cinq degrès centigrades et plus cent degrès centigrades).

En ce qui concerne les avantages de l'extraction à basse température, on peut se rapporter aux publications de l'inventeur Paul TEISSEIRE dans le revue "<u>RECHERCHES</u>" 1952 - 2-11.

D) La rotation permet, en outre, un relatif essorage du solide à travers les surfaces filtrantes, entre chaque lavage et en fin d'extraction.

E) En fin d'extraction, la calandre du tambour alimentée en fluide chaud permet à l'appareil de devenir un excellent sécheur, les vapeurs de solvant passant au travers des éléments filtrants jusqu'à l'obtention d'un résidu sec, facile à manutentionner, à réutiliser ou à détruire, ceci avec le minimum de dépense d'énergie.

F) La conception des portes de vidange et de leur télécommande permettent l'utilisation de dispositifs annexes de manutention automatique des résidus, en toute sécurité pour le personnel de service.

La construction et la conception de l'ensemble de l'extracteur permet le travail dans une gamme de pression inférieure ou supérieure à la pression atmosphérique.

<u>APPLICATIONS PRINCIPALES</u>

1. EXTRACTION DES PRINCIPES ACTIFS DES VEGETAUX PAR DES SOLVANTS LIQUIDES :

- les arômes,
- les parfums,
- les bases de médicaments

2. OPERATIONS CHIMIQUES DIVERSES comportant successivement :

- agitation,
- cristallisation

- lavage filtration
- séchage.

3. BIOTECHNOLOGIE

- extraction par solvants d'un métabolite à partir d'une biomasse.

4. EXTRACTION DES HUILES ESSENTIELLES PAR ENTRAINEMENT A LA VAPEUR.

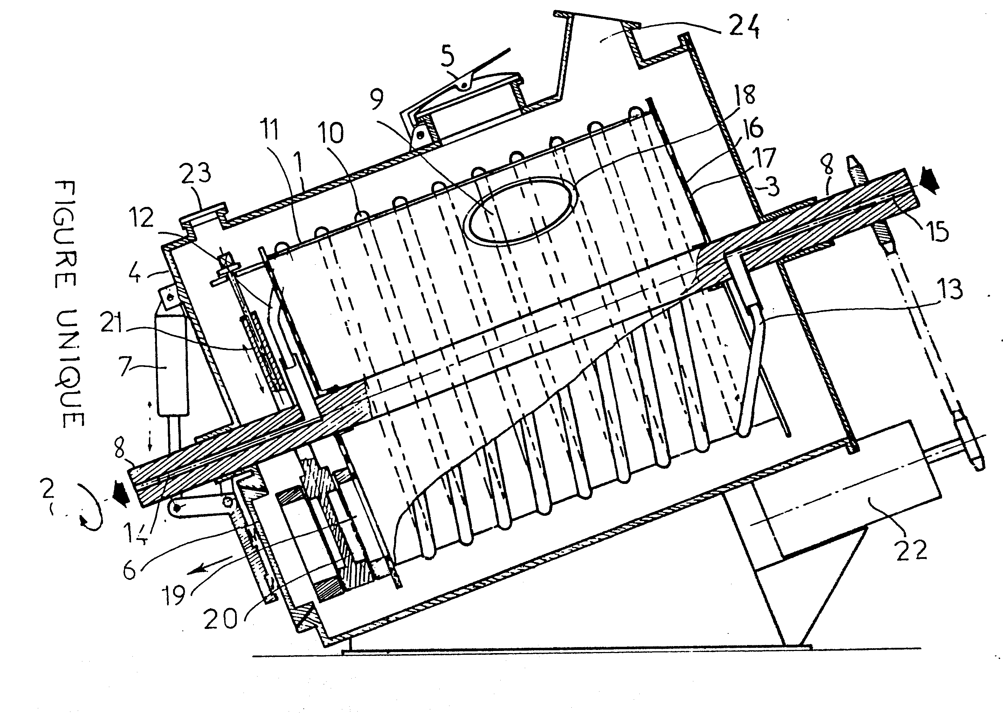

Le dessin ci-joint donné à titre d'exemple indicatif et non limitatif permettra de comprendre aisément l'invention. Il représente un mode de réalisation préféré selon l'invention.

La figure unique représente l'appareil pour l'extraction, vu en coupe selon l'axe longitudinal.

Il est composé d'une cuve 1, dont l'axe longitudinal 2 est incliné. Les bases 3 et 4 sont démontables et elles comportent des ouvertures 5 et 6 de manière à permettre l'introduction et la vidange du solide ainsi que des moyens 7 assurant les mouvements (vérins) et l'étanchéité des portes fermant lesdites ouvertures 5 et 6.

La cuve comporte une ouverture latérale 5, dite ouverture de chargement, avec sa porte de fermeture. Elle comporte également une ouverture 24 permettant le départ des vapeurs. Cette ouverture 24, départ des vapeurs, est prévue au niveau de la paroi, dans la partie haute de la cuve 1.

Une porte de visite 23 est également prévue dans la partie haute du corps de la cuve 1, elle permet d'accéder audispositif qui commande la porte d'ouverture inférieure 20 du tambour 9.

Au niveau de la base inférieure 4, une ouverture inférieure 6 est prévue avec sa porte, commandée par un vérin 7.

Une des bases 4, au moins, de la cuve 1 comporte un dispositif de paliers et d'étanchéité permettant le guidage et le passage d'un axe tournant 8.

Un tambour 9 est monté dans la cuve 1 sur l'axe tournant 8. Cet axe 8 est coaxial avec l'axe longitudinal incliné de la cuve 1. Le moyen d'échange de chaleur est un demi serpentin 10 qui est soudé le long de la paroi extérieure de la calandre 11 dudit tambour 9.

Dans le demi serpentin 10 circule un fluide qui permet à la paroi lisse interne de la calandre 11 de transmettre ou d'absorber des calories à l'intérieur du tambour 9. Les extrémités inférieures 12 et supérieures 13 du demi serpentin 10 sont raccordées à des tubulures d'entrée et de sortie 14, 15 disposées coaxialement à l'arbre tournant 8.

Le tambour 9 comporte deux flasques 16 en forme de bras rayonnants qui maintiennent des secteurs filtrants 17 (tôles perforées, toiles métalliques ou textiles, grilles spéciales).

Le tambour 9 comporte une ouverture supérieure 18, avec sa porte disposée au niveau de la paroi de la calandre 11. Pour le chargement du tambour 9, l'ouverture 18 doit venir en regard de l'ouverture 5 de la cuve 1. Pour évacuer les résidus ou les drèches, une ouverture inférieure 19 est disposée au niveau du flasque inférieur 16. Cette ouverture inférieure 19 dispose d'une porte de fermeture 20 qui est actionnée hydrauliquement par un vérin et un jeu de tringles 21.

Une porte de visite 23, disposée au niveau de la paroi de la cuve 1, permet d'actionner le dispositif 21 qui commande la porte 20 du tambour 9.

Un moteur 22 assure la rotation de l'arbre central 8 sur lequel est monté rotatif le tambour 9.

FONCTIONNEMENT

- Le chargement de la matière solide est effectué aisément (manuellement ou mécaniquement) dans le tambour 9, par la double porte 5 et 18.

- Le niveau du liquide, admis dans la cuve 1, est contrôlé par un niveau magnétique, pour obtenir l'effet de lavage maximum avec le minimum de solvant.

- Le moteur hydraulique 22 entraine, à vitesse réglable, soit en rotation continu, soit en rotation alternative avec ou sans inversion de sens, le tambour 9 contenant la matière solide.

- Le lavage de la matière solide est activé, non seulement par l'agitation due aux mouvements du tambour 9, mais également par circulation supplémentaire du liquide au moyen d'une pompe et de jets perpendiculaires aux flasques filtrants 16 du tambour 9, évitant aussi le colmatage de ceux-ci.

- Les lavages successifs sont effectués à la température voulue grâce à la possibilité de faire circuler un fluide chauffant (ou réfrigérant) dans le circuit qui est intégré à la calandre du tambour 9.

- Les vapeurs éventuelles sont conduites par l'orifice 24, de départ des vapeurs, vers tout système adapté de condensation (et éventuellement de reflux).

- Les lavages terminés, l'essorage du solide (facilité par la rotation du tambour) a lieu à travers la surface filtrante des flasques 16, lesquels peuvent être équipés de tout genre de média et de support adapté au problème.

- L'essorage terminé, deux solutions sont possibles pour la récupération du solvant résiduel et la vidange du solide :

A) Voie humide

Après l'apport de l'eau nécessaire dans l'appareil, la rotation combinée avec un chauffage par le circuit de calandre 11 et éventuellement par une injection de vapeur directe, amènent, assez rapidement, la masse à l'état d'une boue débarrassée de solvant.

Cette boue est rapidement évacuée vers les installations annexes de décantation par l'ouverture hydraulique successive de la porte 6 et de la porte 20 de l'ouverture inférieure 19 du tambour 9.

B) Voie sèche

La rotation du tambour 9 et le chauffage par le circuit de calandre amènent la masse à l'état sec, par distillation du solvant seul, le solide ainsi séché étant alors recueilli par les ouvertures basses comme précédemment dans tout système convenable de manutention, stockage, ensachage, pour être, soit réutilisé, soit détruit par combustion et récupération de calories.

Cet appareil est polyvalent : les utilisateurs trouveront très souvent des applications nouvelles et particulièrement pratiques dans tous les procédés discontinus de la CHIMIE FINE et le la PARACHIMIE, comme dans ceux des AGRO-INDUSTRIES.

L'appareil est muni, éventuellement, de palettes internes et externes pour faciliter l'agitation du solide ou du liquide.

<u>REVENDICATIONS</u>

1. Appareil pour l'extraction d'un solide par un liquide composé d'une cuve fixe (1) et d'un tambour tournant (9) caractérisé par le fait que le tambour tournant (9) comporte des moyens d'échange de chaleur ou de refroidissement (10) de sa calandre (11) pendant la rotation dudit tambour. tournant (9) qui contient le solide à traiter.

2. Appareil pour l'extraction d'un solide par un liquide composé d'une cuve fixe (1) et d'un tambour tournant (9) selon revendication 1, caractérisé par le fait qu'il comporte des moyens de filtration ou de tamisage au niveau des flasques (16) du tambour tournant (9).

3. Appareil selon l'une quelconque des revendications 1 ou 2, caractérisé par le fait que les moyens de filtration (17) sont démontables.

4. Appareil selon la revendication 1, caractérisé par le fait que le moyen d'échange de chaleur est un demi serpentin (10) qui est soudé le long de la paroi extérieure de la calandre (11) dudit tambour tournant (9).

5. Appareil selon la revendication 1, caractérisé par le fait que dans le demi serpentin (10) circule un fluide qui permet à la paroi lisse interne de la calandre (11) de transmettre ou d'absorber des calories à l'intérieur du tambour tournant (9), les extrémités inférieures (12) et supérieures (13) du demi serpentin (10) sont raccordées à des tubulures d'entrée et de sortie (14, 15) disposées coaxialement à l'arbre tournant (8).

6. Appareil selon l'une quelconque des revendications 1, 2, 3, 4 ou 5 caractérisé par le fait que le tambour tournant (9) comporte deux flasques latéraux (16) en forme de bras rayonnants qui maintiennent des filtres ou tamis (17) (tôles perforées, toiles métalliques ou textiles, grilles diverses).

7. Appareil selon l'une quelconque des revendications 1, 2, 3, 4, 5 ou 6, caractérisé par le fait que les moyens d'ouverture et de fermeture et d'étanchéité, ainsi que la conception de la cuve (1) et du tambour permettent le travail dans une gamme de pression inférieure ou supérieure à la pression atmosphérique.

FIGURE UNIQUE

0197872

Office européen
des brevets

**RAPPORT DE RECHERCHE EUROPEENNE**

**0197872**
Numéro de la demande

EP 86 43 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-1 567 709 (EMIL J. CARROL) <br> * Page 1, lignes 60-110; page 2, lignes 1-13 * | 1 | B 01 D 11/02 |
| A | | 4,5,7 | |
| | --- | | |
| Y | FR-A- 387 889 (L. BARBE) <br> * Pages 1-3 * | 1 | |
| A | | 2,3,6, 7 | |
| | --- | | |
| A | FR-A-2 194 930 (CROCKER) | | |
| | --- | | |
| A | DE-C- 431 478 (K. NIESSEN) | | |
| | ----- | | |

**DOMAINES TECHNIQUES RECHERCHES (Int. Cl.4)**

B 01 D
F 26 B
F 28 D
B 01 J

Le présent rapport de recherche a été établi pour toutes les revendications

| Lieu de la recherche | Date d'achèvement de la recherche | Examinateur |
|---|---|---|
| LA HAYE | 18-06-1986 | DE PAEPE P.F.J. |